# EUROPÄISCHE PATENTANMELDUNG

(11) **EP 1 432 201 A1**
(43) Veröffentlichungstag der Anmeldung: **23.06.2004**
(21) Anmeldenummer: 03023397.7
(22) Anmeldetag: 17.10.2003
(51) Int. Cl.: H04L 29/06, G06F 17/60, B61L 27/00, H04L 29/08, H04L 12/56

(54) **Ressourcenverwaltung für IP-basierte Netze mit zentraler Instanz zur Entscheidung von Zugriffskonflikten**

(30) Priorität: 19.12.2002 DE 10260128
(71) Anmelder: DB Systems GmbH, 60326 Frankfurt (DE)
(72) Erfinder: Schuster, Harald, 64331 Weiterstadt (DE)
(74) Vertreter: Zinken-Sommer, Rainer

(57) **Zusammenfassung**

Die Erfindung betrifft ein Verfahren zum Aufbau und Überwachen von Kommunikationsströmen innerhalb eines IP(Internet-Protokoll)-basierten Netzwerkes mit limitierten Übertragungsressourcen zwischen einer zentralen Instanz und dezentral in einer Feldebene verteilten Endgeräten. Neben einer geringen, durch wenig prioritäre Kommunikationsbeziehungen gebildeten Grundlast sollen insbesondere spontane und ereignisorientierte Kommunikationsbedürfnisse mit verlässlicher Prozesssicherheit eine qualitativ und quantitativ ausreichende Ressourcenzuteilung erhalten. Gleichzeitig müssen die Kommunikationskosten für das Sammeln und Verteilen von Informationen von und zu dezentralen Verkehrstationen signifikant reduziert werden, so dass auch schwächer frequentierte dezentrale Standorte angeschlossen werden können. Dies wird dadurch erreicht, dass vor Aufbau einer Kommunikationsbeziehung zwischen der zentralen Instanz und einem Endgerät eine Überprüfung der Bandbreiten-Verteilung auf der benötigten Übertragungsressource durchgeführt wird, konkurrierende Nutzungsanfragen auf eine operative Bedienebene der zentralen Instanz eskaliert und unter Berücksichtigung der den Kommunikationsbeziehungen zugeordneten gewichteten Prioriäten einer Entscheidungsinstanz zugeführt werden.

## Beschreibung

Die Erfindung betrifft ein Verfahren zum Aufbau und Überwachen von Kommunikationsströmen innerhalb eines IP(Internet-Protokoll)-basierten Netzwerkes mit limitierten Übertragungsressourcen zwischen einer zentralen Instanz und dezentral in einer Feldebene verteilten Endgeräten.

Aus Kosten- und Effizienzgründen werden die betrieblichen Prozesse bei den flächenmässig weit verzweigten spurgeführten Verkehrsmitteln immer stärker zentralisiert und automatisiert. Dadurch ist abseits der grossen Knotenbahnhöfe immer weniger örtliches Personal vorhanden, welches in der Vergangenheit - neben seinen eigentlichen Tätigkeiten - den reisenden Kunden auch als Ansprechpartner im Falle von Unregelmässigkeiten jeder Art zur Verfügung stehen konnte. In Konsequenz daraus betreibt die Deutsche Bahn AG nunmehr in allen grösseren von ihr bedienten Verkehrsstationen als Leitstand ausgebildete Verkehrszentralen (Betriebszentrale Bahnhof bzw. Marke "3S-Zentrale"), an der alle für die Reisenden hinsichtlich der aktuellen Situation im Bahnverkehr sowie im Betrieb der Verkehrsstation wichtigen Informationen gesammelt, aufbereitet und mittels Kundeninformationssystemen (Monitore, Anzeigetafeln, Lautsprecherdurchsagen, Beantwortung telefonischer Kundenanfragen etc...) den Reisenden wieder zur Verfügung gestellt werden. Diese Verkehrszentralen sind auch Melde- und Koordinierungsstelle für kundenrelevante gebäudetechnische Unregelmässigkeiten (z.B. Funktionsüberwachung der Heizungs- bzw. Klimatisierungsanlagen, Brand- und Einbruchsmeldeanlagen etc...). Analoge Anwendungsgebiete finden sich natürlich auch bei anderen Einrichtungen, die Informationen von dezentral in der Feldebene verteilten Endgeräten, Sensoren etc. aufnehmen, an zentraler Stelle verarbeiten und über dezentral verteilte Anzeige- bzw. Ausgabegeräte wieder bereitstellen. Beispielsweise seien hier sowohl die Informationsanlagen städtischer Verkehrsbetriebe oder an Flughäfen ebenso wie die Überwachungs- und Steuerungszentralen auf dem Sektor der Gebäudeautomation (Hochhäuser, Einkaufszentren, Messegelände...) genannt.
Als Besonderheit auf dem Gebiet des Eisenbahnverkehrs kommt hinzu, dass die Verkehrsstationen mit grossen Entfernungen zueinander in der Fläche verteilt sind und aus Wirtschaftlichkeitsgründen nicht mittels breitbandigen Kommunikationswegen oder gar proprietären Übertragungswegen (In-house- oder Campus-Netze) an die jeweils überwachende und koordinierende Bahnhofszentrale im nächstgelegenen grösseren Knotenbahnhof angeschlossen werden können.

Nahezu parallel zum Konzentrations- und Rationalisierungsgeschehen im Bahnbetrieb hat sich das Internet zu einem allgegenwärtigen Bestandteil nahezu aller industrieller und kommerzieller Prozesse entwickelt. Es besteht demzufolge ein grosses Bedürfnis, die Leistungsfähigkeit diese Kommunikationsmediums zu steigern und die damit einhergehenden Kostenvorteile auch für diejenigen Kommunikationslösungen nutzbar zu machen, die bisher anderen Übertragungsmedien vorbehalten waren.
In der Vergangenheit war das Internet in erster Linie ein Medium zur Übertragung von textbasierten Daten, z.B. Textdateien. Zur weitgehend effizienten Übertragung möglichst grosser Datenmengen wurden deshalb in erster Linie Stossbetriebsübertragungsarten ("burst mode") entwickelt und eingesetzt. Insbesondere bei der Übertragung von Sprach- oder Video-Daten, wie sie bei zentralisierten Anlagenüberwachungs- bzw. Kundeninformationssystemen üblicherweise anfallen, erreichen derartige Übertragungsarten jedoch sehr schnell ihre Grenzen. Sowohl Sprach- als auch Video-Daten weisen sehr unterschiedliche Charakteristika auf und stellen demgemäss unterschiedliche Anforderungen an ihre jeweiligen Übertragungswege. Die Sprachübertragung über das Internet ("Voice over IP" bzw. VOIP) ist sehr sensibel bezüglich der bei paket- bzw. internetorientierten Übertragungsverfahren auftretenden Wartezeit- und Datenverlustproblematiken. Die Videodatenübertragung hingegen stellt sich diesbezüglich robuster dar, benötigt jedoch wegen der grossen anfallenden Datenmengen deutlich grössere Übertragungsbandbreiten.
Für den wirtschaftlichen Betrieb geographisch weit verzweigter Netze mit vielen dezentralen Endgeräte-Standorten und einem hohen Anteil zu übertragender Audio- und / oder Video-Datenströmen ist es von entscheidender Bedeutung, auch bei geringsten Übertragungskapazitäten einen definierten Qualitätsstandard gewährleisten zu können.

Bisherige Ansätze zur Lösung der Ressourcenaufteilung zwischen konkurrierenden Datenströmen auf IP-Netzwerken konzentrieren sich im wesentlichen auf automatisierte, selbständig ablaufende Verfahren, die einen möglichst hohen Datendurchsatz und eine möglichst hohe Ausnutzung der vorhandenen Leitungswege erreichen sollen. So offenbaren beispielsweise DE 101 61 135 und DE 101 61 136 die Verwendung dynamischer Freigaberaten, die sich an adaptiven Schwellwerten orientieren. Damit sollen ungünstige Auslastungsgrade der Übertragungswege, die durch zu statisch orientierte Ressourcenzuweisungen an konkurrierende Datenströme verursacht sind, vermieden werden. Ein derartiges Verfahren ist jedoch auf Massenverkehre mit entsprechend hohen Übertragungsmengen hin optimiert und verliert bei Kommunikationsstrukturen, die im Mengenaufkommen eher eingeschränkt sowie in erster Linie ereignis- bzw. einzelfallbezogen orientiertiert sind, seine Effizienz.

Desweiteren ist aus DE 198 49 784 ein Verfahren bekannt, bei dem zur Verbesserung der Zuteilung übertragungstechnischer Ressourcen während des Verbindungsaufbaus einer paket- oder intemetorientierten Verbindung ein zusätzlicher bidirektionaler Zugriffskanal mit geringer Übertragungsrate aufgebaut wird, über den eine Anforderungsinformation an eine zentrale Ressourceninstanz gerichtet wird, bzw. eine Zuteilinformation an die anfordernde dezentrale Einrichtung übermittelt wird. Aber auch dieses Verfahren hat sich ausdrücklich zum Ziel gesetzt, eine möglichst gleichberechtigte Zuteilung der Netzressourcen an alle Kommunikationsteilnehmer zu gewährleisten. Die Zielsetzung einer gleichberechtigten Ressourcenzuteilung ist jedoch mit Echtzeitanforderungen nicht kompatibel. Somit sind die bislang bekannten Konfigurationen zur Integration von IP-basierten Sprach- / Videodaten auf operativen Leitständen unter Echtzeit-Anforderungen nicht geeignet.

Der Erfindung liegt die Aufgabe zugrunde, ein Verfahren zum Aufbau und Überwachen von Kommunikationsströmen innerhalb eines IP(Internet-Protokoll)-basierten Netzwerkes mit limitierten Übertragungsressourcen zwischen einer zentralen Instanz und dezentral in einer Feldebene verteilten Endgeräten zu entwickeln, bei dem - neben einer geringen Grundlast durch wenig prioritäre Kommunikationsbeziehungen - spontane und ereignisorientierte Kommunikationsbedürfnisse unter Echtzeitanforderungen mit verlässlicher Prozesssicherheit eine qualitativ und quantitativ ausreichende Ressourcenzuteilung erfahren. Gleichzeitig müssen die Kommunikationskosten für das Sammeln und Verteilen von Informationen von und zu dezentralen Verkehrstationen signifikant reduziert werden, so dass auch schwächer frequentierte dezentrale Standorte angeschlossen werden können. Neben einer hohen Verfügbarkeit muss das Verfahren Datensicherheit (Schutz vor unbefugtem Zugriff, Verfälschung...) gewährleisten. Desweiteren ist ein Verfahren von geringer Komplexität und mit entsprechend vorteilhaften Betriebsführungskosten anzustreben.

Diese Aufgabe wird in Verbindung mit dem Oberbegriff des Patentanspruches 1 erfindungsgemäß dadurch gelöst, dass vor Aufbau einer Kommunikationsbeziehung zwischen der zentralen Instanz und einem Endgerät eine Überprüfung der Bandbreiten-Verteilung auf der benötigten Übertragungsressource durchgeführt wird, konkurrierende Nutzungsanfragen auf eine operative Bedienebene der zentralen Instanz eskaliert und unter Berücksichtigung der den Kommunikationsbeziehungen zugeordneten gewichteten Prioriäten einer Entscheidungsinstanz zugeführt werden. Durch die Einführung sowohl einer Priorisierung der verschiedenen Ressourcenanforderungen als auch einer besonders einfach strukturierten Eskalationsebene für den Fall von Ressourcenkonflikten ist es in vorteilhafter Weise möglich, trotz minimalster Leitungskapazitäten eine schnelle, situationsgerechte und verlässliche Ressourcenzuteilung für ereignisorientierte Kommunikationsbedürfnisse mit Echtzeitanforderung zu gewährleisten und damit der operativen Ebene der zentralen Instanz (z.B. einem Mitarbeiter im Leitstand) eine prozesssichere Grundlage für die notwendigen Entscheidungen und Bedienhandlungen zu geben.
Weitere vorteilhafte Ausgestaltungen des erfindungsgemässen Verfahrens sind den Unteransprüchen zu entnehmen.
Die erfindungsgemässe Lösung vermeidet es, die Entscheidungsregeln für den Konflikt- bzw. Eskalationsfall in die Ressourcenverwaltungsinstanz zu integrieren. Würde eine solche Integration ausgeführt, bestünde das Problem, dass bei jeder Änderung an dieser Ressourcenverwaltungsinstanz ein aufwendiger Prozess von Integrations-, Abnahme- und Regressionstests erforderlich wäre. Eventuelle während dieser Testprozedur auftauchende Probleme würden die Kommunikationsfähigkeit des gesamten Netzwerkes gefährden. Durch die logische Trennung von Verbindungsvermittlung und Priorisierung erhält man eine sehr kompakte und stabile Ressourcenverwaltungs-Komponente, die gegebenenfalls an die Netzwerktopologie konfiguriert, jedoch nicht mehr geändert werden muss. Somit kann man vorteilhafterweise auf Abnahmeprozeduren an dieser wichtigen Kernkomponente verzichten und erreicht eine Lösung, die - falls im Netzwerk keine Eskalation bzw. keine Konflikte auftreten - auch alleine lauffähig wäre.
Die erfindungsgemässe Einführung einer Eskalationsinstanz ermöglicht es, Prozessregeln zu definieren bzw. ein System mit derartigen vordefinierten Regeln einzusetzen, ohne sich um den Verbindungsaufbau kümmern zu müssen. Diese Prozessregeln können somit auch ein grösseres Regelwerk mit komplexen Abnahmeszenarien darstellen, da die üblichen Nachteile eines derart komplexen Regelwerkes (wie z.B. geringere Stabilität, höherer Wartungsaufwand) keinen negativen Einfluss auf den eigentlichen Verbindungsaufbau haben. Dieser bleibt schlank, leicht wartbar und leistungsfähig.

Der Erfindungsgedanke wird in nachfolgendem Ausführungsbeispiel visualisiert. Es zeigt jeweils in Prinzipdarstellung:

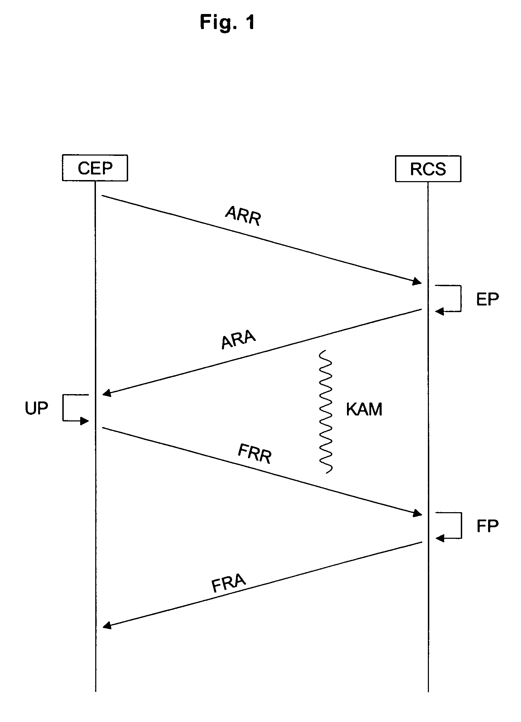

- **Figur 1**: Sequenzdiagramm für Ressourcenanforderung und -zuweisung

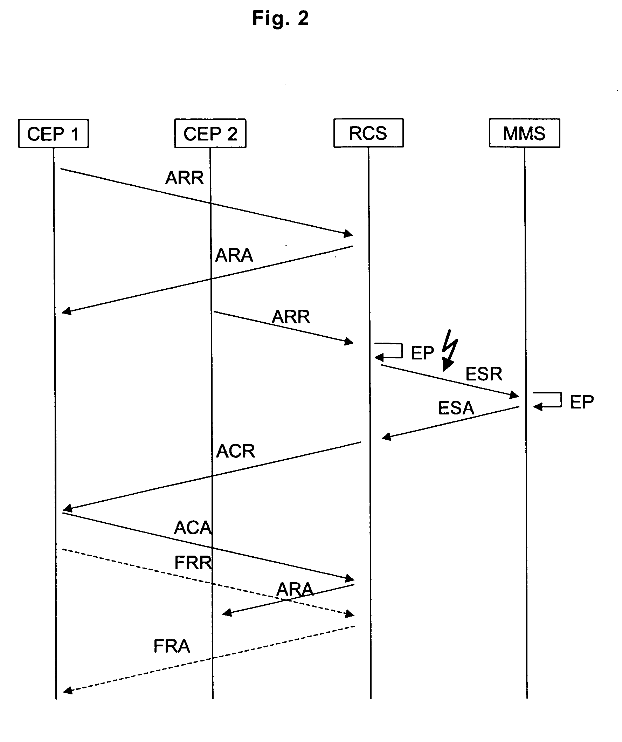

- **Figur 2**: Sequenzdiagramm für Eskalation an Managementsystem (MMS)

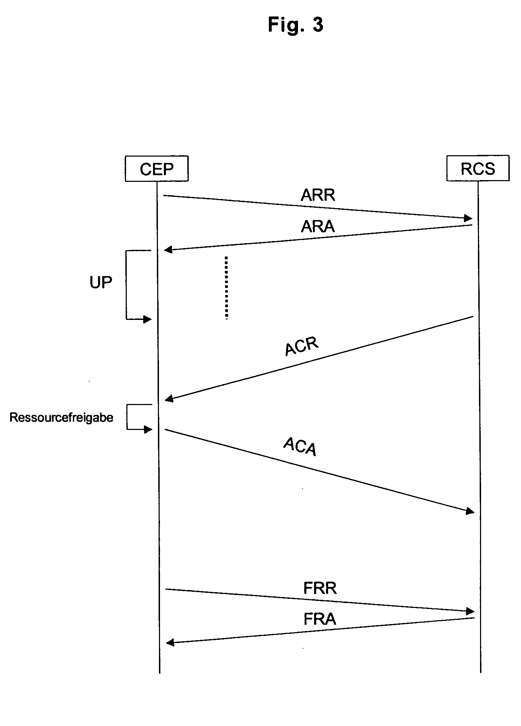

- **Figur 3**: Sequenzdiagramm für Ressourcenänderung durch Ressourcen-Verwaltungsinstanz (RCS)

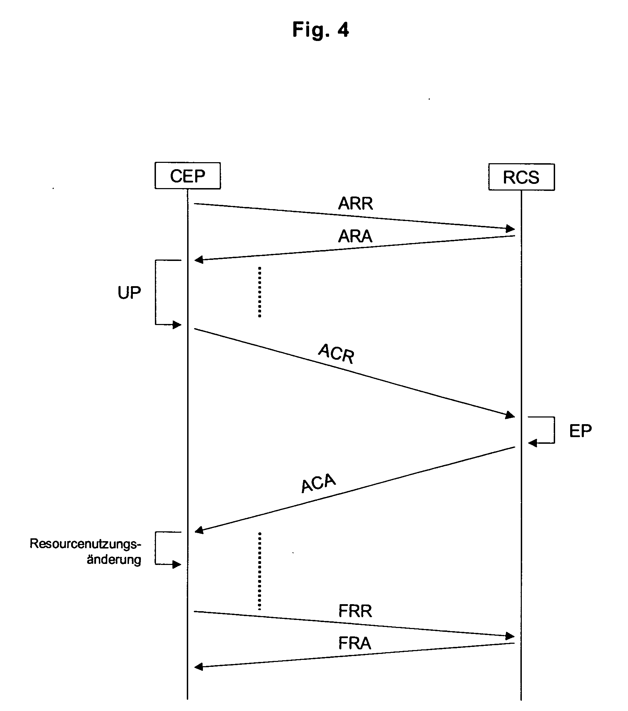

- **Figur 4**: Sequenzdiagramm für Ressourcenänderung durch Endpunkt (EP)

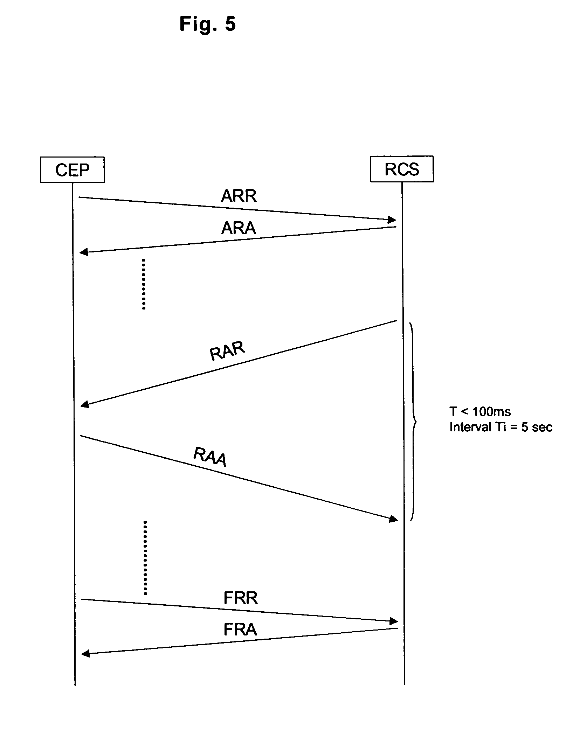

- **Figur 5**: Sequenzdiagramm für Aktivitätsüberprüfung auf der zugeteilten Übertragungsressource

In der Verkehrszentrale eines Bahnhofes werden verschiedene Teilanwendungssysteme auf einen operativen Leitstand vereinigt, der auch die Schnittstelle dieser Teilanwendungssysteme zur Kommunikation mit ihren dezentralen Ein- bzw. Ausgabegeräten über eine gemeinsam genutzte Kommunikationsinfrastruktur ansteuert. Im einzelnen handelt es sich um die Teilanwendungen:
- Service-Sicherheit-Sauberkeit (3-S)
   Diese Anwendung koordiniert alle Aktivitäten von Bahnhofsmitarbeitern, die im Zusammenhang mit der Aufrechterhaltung bzw. Wiederherstellung eines ordnungsgemässen und kundenfreundlichen Betriebes der Verkehrsstationen stehen (z.B. Reinigungsdienste, Wach- und Streifendienste, Servicemitarbeiter für Auskunft auf dem Bahnsteig, Gepäckträgerdienste etc.). Mittels ferngesteuerter Videoanlagen können räumliche Bereiche optisch fernüberwacht werden; mittels dezentraler Sprechstellen (Notruf-Informationssäulen, NIS) können Reisende Informationsanrufe und Notrufe an den Leitstand übermitteln.
- Reisendeninformationssystem (RIS)
   Diese Anwendung informiert die Reisenden über die Ist-Situation des Bahnbetriebes, insbesondere über Abweichungen vom Sollzustand (Verspätungen, geänderte Zugläufe, geänderte Wagenreihungen etc.). Als Ausgabegeräte dienen optische Anzeigen (Monitore, Anzeigetafeln) sowie akustische Durchsagen.
- Technisches Gebäudemanagement (TGM)
   Diese Anwendung integriert die Steuer- und Überwachungseinrichtungen der technischen Gebäudeausrüstung der Verkehrsstation. In der Bahnhofszentrale werden insbesondere die für den Kundenverkehr relevanten Meldungen aus der Feldebene entgegengenommen (z.B. Ausfall von Fahrstühlen bzw. Rolltreppen, Ausfall Klimatisierung bzw. Heizung etc.). Im wesentlichen werden Steuersignale von einer dezentralen Sensor-Ebene entgegengenommen.

Da es sich insbesondere bei RIS und TGM um bereits vorhandene und spezifizierte Teilanwendungssysteme handelt, sollen die Arbeitsabläufe der Verkehrszentrale in diese nicht direkt eingreifen. Die Verkehrszentrale verfügt deshalb über ein eigenständiges Workflow-Anwendungssystem, das als Software-Komponente eine freie Definition der Prozesse für die Abwicklung der Arbeitsaufgaben in der Verkehrszentrale erlaubt.
Die Verkehrszentrale weist üblicherweise eine sternförmige Topologie auf, bei der die regionalen Verkehrsstationen an den zugehörigen zentralen Knotenbahnhof mittels Datenleitungen angebunden sind. Die Übertragungsressourcen dieser Datenleitungen sind zwar an die betriebliche Bedeutung der angeschlossenen regionalen Verkehrsstation angepasst, jedoch mit einer Kapazität von üblicherweise ca. 1024 kBit/s in ihrer Leistungsfähigkeit sehr begrenzt.
Mit Hilfe eines Audiosystems können Aufnahmen von Gesprächen des Leitstands-Bedieners mit Anrufern (Notruf, Information) erzeugt werden. Ein Information Retrieval System dient zur Archivierung und fallweisen statistischen Aufbereitung der erfassten Vorgänge. Zusätzlich verfügt der Leitstands-Bediener über einen Zugang zum unternehmensintemen Intranet, über den der Zugriff zu weiteren Datenbanken (z.B. Verwaltung von Fundobjekten, Verwaltung ausgesprochener Hausverweise etc.) realisiert wird.
Kernstück der Verkehrszentrale ist jedoch ein Ressourcen-Verwaltungssystem (RCS) mittels dessen die Bandbreite der zur Verfügung stehenden Netzwerkinfrastruktur insbesondere für die Sprach-, Videodatenkommunikation verwaltet wird. Die Teilanwendungssysteme verfügen über Kommunikations-Endpunkte (CEP), die in das Workflow-Anwendungssystem der Verkehrszentrale integriert und an das Resourcen-Verwaltungssystem (RCS) angebunden sind. Grundsätzlich können die unterschiedlichen Endpunkte gleichzeitig mehrere Kommunikationsverbindungen aufbauen. Dazu müssen sie beim RCS die Zuteilung von Netzwerk-Ressourcen anfordern.
Im Basis-Anwendungsfall fordert ein Kommunikations-Endpunkt eines Teilanwendungssystems (CEP) über die Ressourcen-Verwaltungsinstanz (RCS) mittels einer Anfrage (AllocateResourceRequest; ARR) eine bestimmte Bandbreite an. Die ARR enthält zur eindeutigen Identifizierung eine Transaktions-ID (TID), da eine Kommunikationsteilanwendung mehrere Anfragen generieren kann. Es werden in der Anfrage sowohl die anfragende Instanz (Requestor) als auch der Kommunikationspartner der anfragenden Instanz mit ihren im IP-Netz verwalteten IP-Namen (DNSName1; DNSName2) bezeichnet. Die Namensauflösung erfolgt mittels eines DNS (Domain Name Service) und wird durch die RCS durchgeführt. Die Anfrage wird mit der für den Ressourcetyp (Audio, Video) gewünschten Priorität und den notwendigen Bandbreiteninformationen an die RCS adressiert. Die angeforderten Bandbreiten werden über Klassen - in Anlehnung zu den im Netzdesign mit DiffServ festgelegten Klassen - reserviert. Die Anfrage wird durch die RCS innerhalb einer vorkonfigurierbaren Zeit (z.B. 100 ms) bearbeitet und auf Erfüllbarkeit geprüft. Sofern die angeforderte Bandbreite verfügbar ist, erfolgt mittels einer Bestätigung (AllocateResourceAcknowledge; ARA) deren Zuteilung. Die Antwort ist bezogen auf die gesandte Transaktions-ID mit einem Fehler-Code sowie der zuweisbaren Bandbreite versehen. Ein positive Bestätigung der Anfrage (ErrorCode=0) erlaubt dem CEP die Ressource für einen vorab unlimitierten Zeitraum zu nutzen. Nach Beendigung der Kommunikationsbeziehung erfolgt ein Freigabe der genutzten Bandbreite durch eine Mitteilung seitens des Endpunktes der Anwendung (CEP) an die RCS (FreeResourceRequest; FRR). Die RCS registriert diese Bandbreite nunmehr wieder als frei verfügbar und beantwortet innerhalb einer vorkonfigurierbaren Zeitspanne T (z.B. 100 ms) diese Freigabe (FreeResourceAcknowledge; FRA), wobei auch hier ein Fehler-Code die Ausführung qualifiziert. Eine negative Beantwortung der Anfrage ARR (ErrorCode #0) führt zum Abbruch des Ablaufs und muss vom CEP bearbeitet werden. Die synchrone Reihenfolge der Aufrufe wird gewährleistet.

Die Nachrichten lassen sich wie folgt formulieren (der in Klammern angegebene Parametersatz beschreibt die für die Kommunikationsbeziehung jeweils angeforderten Rahmenbedingungen):

### ARR ( TID, DNSName1, DNSName2, Priorität, RessourceTyp, RessourceAnforderungsBeschreibung)

- TID:: Transaktions- ID
- DNSName1: Im IP-Netz verwalteter IP-Name der rufenden Anwendung
- DNSName2: Im IP-Netz verwalteter IP-Name des gerufenen Endpunktes
- Priorität: Dringlichkeit des Kommunikationsaufrufs, der Parameter ist für alle CEP, die RCS und das Managementsystem (MMS) identisch definiert.
- RessourceTyp: Dieser Parameter ist für alle CEP, die RCS und das Managementsystem (MMS) identisch festgelegt (Audio, Video)
- Ressource- Anforderungs- Beschreibung: Dieser Parameter enthält weitere Unterparameter
FlowSpec FW Datenstromspezifikation für'Hin'-Kanal (FW)
FlowSpec BW Datenstromspezifikation für'Rück'-Kanal (BW)
beide FlowSpec basieren auf der Grundlage von RFC1363 ITU
Übertragung (Multicast oder Unicast) für den 'Hin'-Kanal (FW)
Übertragung (Multicast oder Unicast) für den 'Rück'-Kanal (BW)

### ARA (TID, ErrorCode, RessourceZuweisungsBeschreibung)

- TID: Transaktions-ID
- ErrorCode: Fehlernummer =0: positive Beantwortung,
Fehlercode ≠ 0: Abbruch des Ablaufs
- Ressource- Zuweisungs- Beschreibung: weitere Unterparameter zur Beschreibung der zugewiesenen Ressource
FlowSpec FW Datenstromspezifikation für'Hin'-Kanal (FW)
FlowSpec BW Datenstromspezifikation für'Rück'-Kanal (BW)
beide FlowSpec basieren auf der Grundlage von RFC1363 ITU

### FRR (TID)

- TID: Transaktions- ID für freizugebende Kommunikationsbeziehung

### FRA (TID, ErrorCode )

- TID: Transaktions- ID für freizugebende Kommunikationsbeziehung
- ErrorCode: positive (= 0) oder negative (#0) Bestätigung der Anfrage; negativer Fehlercode = Abbruch des Ablaufs

Während der Nutzung einer Ressource durch einen CEP besteht für die RCS die Möglichkeit, vom CEP die Freigabe der gesamten von einer Anwendung genutzte Bandbreite bzw. die teilweise Freigabe der benutzten Bandbreite einer Anwendung zu erzwingen. Hierfür signalisiert die RCS an den CEP für welche Transaktion eine gesamte oder partielle Ressourcenrückgabe zu erfolgen hat (AllocateChangeRequest; ACR). Der aufgeforderte CEP bestätigt die Rückgabe unter Angabe von Fehlerkennung und Qualitätsangabe (AllocateChangeAcknowledge; ACA). In beiden Fällen werden sowohl die Größenordnung der freizugebenden Bandbreite als auch die der freigegebenen Bandbreite mittels Parametrierung der Befehle mitgeteilt.

### ACR(TID, FlowSpec FW, FlowSpec BW)

- TID: Transaktions-ID der zu verändernden Komm.beziehung
- FlowSpec FW: Datenstromspezifikation für den 'Hin'-Kanal (FW)
- FlowSpec BW: Datenstromspezifikation für den 'Rück'-Kanal (BW), beide FlowSpec basieren auf der Grundlage von RFC1363 ITU

### ACA(TID, ErrorCode, FlowSpec FW, FlowSpec BW)

- TID: Transaktions- ID der zu verändernden Komm.beziehung
- ErrorCode: Fehlernummer =0: positive Beantwortung,
Fehlercode ≠ 0: Abbruch des Ablaufs
- FlowSpec FW: Datenstromspezifikation für'Hin'-Kanal (FW)
- FlowSpec BW: Datenstromspezifikation für'Rück'-Kanal (BW),
Beide FlowSpec basieren auf der Grundlage von RFC1363 der ITU

Analog dazu kann ein CEP während der Nutzung einer Ressource eine geänderte Ressourcenzuweisung initiieren. In der Regel ist dies durch eine Nutzerinteraktion bedingt, die beispielsweise eine Videowiedergabe in einer höheren Qualität anfordert. Hierfür signalisiert der CEP für welche Transaktion eine Ressourcenänderung erfolgen soll (AllocateChangeRequest; ACR). Die RCS beantwortet den Änderungswunsch (AllocateChangeAcknowledge; ACA) und teilt das Ergebnis mit einer Fehlerkennung und Qualitätsangabe mit. In beiden Fällen wird sowohl die Größenordnung der zu verändernden Bandbreite, wie auch die daraufhin zugeteilte Bandbreite mittels Parametrierung der Befehle mitgeteilt.

### ACR(TID, FlowSpec FW, FlowSpec BW)

- TID: Transaktions-ID der zu verändernden Komm.beziehung
- FlowSpec FW: Datenstromspezifikation für'Hin'-Kanal (FW)
- FlowSpec BW: Datenstromspezifikation für'Rück'-Kanal (BW),
Beide FlowSpec basieren auf der Grundlage von RFC1363 ITU

### ACA(TID, ErrorCode, FlowSpec FW, FlowSpec BW)

- TID: Transaktions-ID der zu verändernden Komm.beziehung
- ErrorCode: Fehlercode ungleich 0, der zur Fehlererkennung dient und zum Ab bruch des Ablaufs führt
- FlowSpec FW: Datenstromspezifikation für'Hin'-Kanal (FW)
- FlowSpec BW: Datenstromspezifikation für'Rück'-Kanal (BW),
Beide FlowSpec basieren auf der Grundlage von RFC1363 ITU

Zur Überwachung des Kommunikationsverlaufs der Anwendungen wird jeder CEP, dem eine Ressource zugeteilt wurde und diese noch nicht als frei zurückgemeldet hat, in regelmässigen Abständen (konfigurierbar, z.B. 5 s) zur Beantwortung einer Lebenszeichenanfrage aufgefordert (ResourceAliveRequest; RAR). Anfrage und Antwort (ResourceAliveAcknowledge; RAA) beziehen sich auf jeweils genau eine existierende Transaktion (TID). Der KeepAlive-Mechanismus ist verbindungsorientiert zu betrachten. Besteht beim EP keine Kenntnis von der angefragten Transaktion, so wird dies über den Fehler-Code kommuniziert.

### RAR(TID)

- TID: Transaktions- ID einer bestehenden Kommunikationsbeziehung

### RAA(TID, ErrorCode)

- TID: Transaktions- ID des Kommandos RAR
- ErrorCode: Fehlercode # 0 bei unbekannter Kommunikationsbeziehung
Fehlercode = 0 bei positiver Antwort

Sobald die RCS eine von einem CEP angeforderte Bandbreite innerhalb einer Verkehrsklasse (TrafficClass, z.B. Video) nicht zusagen kann, eskaliert die RCS an das übergeordnete Managementsystem (MMS) und fordert eine Entscheidung an (Escalation Request; ESR). Die RCS informiert dabei über die verursachende Transaktion, Verkehrsklasse und mit welcher Priorität die Anfrage gestellt wurde. Zusätzlich wird dem MMS eine Liste aller aktuellen Transaktionen der betroffenen Verkehrsklasse übertragen. Die einzelnen Einträge der Liste beschreiben zu jeder Transaktion die Namen der Kommunikationspartner (DNS-Namen), sowie die Priorität der zugehörigen Kommunikationsbeziehung. Das MMS entscheidet dann ob eine der Transaktionen aus der Liste zum Abwurf bestimmt werden kann. Unter Abwurf ist in diesem Fall zu verstehen, dass der Abbruch durch einen der beiden Kommunikationspartner erfolgen muss; es erfolgt kein Durchgriff seitens des MMS auf die Kommunikationsbeziehung. Das MMS teilt der RCS zusammen mit der Angabe der die Anfrage initiierenden TID den gegebenenfalls abzuwerfenden Kommunikationspartner mit (Escalation Acknowledge; ESA).

### ESR(TID, TrafricClass, Prio, Verbindungsliste)

- TID: Transaktions- ID
- TrafficClass: Verkehrsklasse (gem. Netzwerkdesign nach DiffServ)
- Priority: Priorität der Kommunikationsbeziehung
- Verbindungsliste: Liste der aktuellen Kommunikationsbeziehungen

### ESA( TID, ErrorCode, DNSName)

- TID: Transaktions- ID
- ErrorCode: Fehler-Code # 0 (z.B. TID unbekannt)
- DNSName1: im IP-Netz verwalteter Name des Abwurfkandidaten

### Bezugszeichenliste:

- CEP: Kommunikations-Endpunkte unterschiedlicher fachlicher Anwendungen
- RCS: Ressourcenverwaltungssystem (Resource Control System)
- MMS: Management System (Management System)
- ARR: Anfrage Ressourcenzuteilung (Allocate Resource Request)
- ARA: Bestätigung Ressourcenzuteilung (Allocate Resouce Acknowledge)
- FRR: Rückgabe Ressourcenzuteilung (Free Resource Request)
- FRA: Bestätigung Ressourcenrückgabe (Free Resource Acknowledge)
- ACR: Änderungsantrag für zugewiesene Ressource (Allocate Change Request)
- ACA: Bestätigung geänderte Ressourcenzuweisung (Allocate Change Acknowledge)
- RAR: Abfrage Aktiviät auf zugeteilter Ressource (Resource Alive Request)
- RAA: Bestätigung Aktivität auf zugeteilter Ressource (Resource Alive Acknowledge)
- KAM: Lebenszeichenanfrage (Keep Alive Mechanism)
- ESR: Anfrage Eskalationsebene (Escalation Request)
- ESA: Rückmeldung Eskalationsebene (Escalation Acknowledge)
- TID: Transaktions-ID
- EP: Prüfungsvorgang (Evaluation Process)
- UP: Nutzungsvorgang (Using Process)
- FP: Freigabevorgang

## Patentansprüche

1. Verfahren zum Aufbau und Überwachen von Kommunikationsströmen innerhalb eines IP(Internet-Protokoll)-basierten Netzwerkes mit limitierten Übertragungsressourcen zwischen einer zentralen Instanz und dezentral in einer Feldebene verteilten Endgeräten
**dadurch gekennzeichnet,**
**dass** vor Aufbau einer Kommunikationsbeziehung zwischen der zentralen Instanz und einem Endgerät eine Überprüfung der Bandbreiten-Verteilung auf der benötigten Übertragungsressource durchgeführt wird, konkurrierende Nutzungsanfragen auf eine operative Bedienebene der zentralen Instanz eskaliert und unter Berücksichtigung der den Kommunikationsbeziehungen zugeordneten gewichteten Prioriäten einer Entscheidungsinstanz zugeführt werden.

2. Verfahren zum Aufbau und Überwachen von Kommunikationsströmen innerhalb eines IP-basierten Netzwerkes mit limitierten Übertragungsressourcen zwischen einer zentralen Instanz und dezentral in einer Feldebene verteilten Endgeräten nach Anspruch 1, **dadurch gekennzeichnet, dass** die Kommunikationsströme mittels logischer und / oder physischer Endpunkte (CEP) in die zentrale Instanz integriert werden.

3. Verfahren zum Aufbau und Überwachen von Kommunikationsströmen innerhalb eines IP-basierten Netzwerkes mit limitierten Übertragungsressourcen zwischen einer zentralen Instanz und dezentral in einer Feldebene verteilten Endgeräten nach mindestens einem der Ansprüche 1 bis 2, **dadurch gekennzeichnet, dass** die Endpunkte (CEP) der Kommunikationsströme im Bereich der zentralen Instanz an eine Instanz (RCS) zur Verwaltung der Bandbreite der gemeinsam genutzten Netzwerkinfrastruktur angebunden werden.

4. Verfahren zum Aufbau und Überwachen von Kommunikationsströmen innerhalb eines IP-basierten Netzwerkes mit limitierten Übertragungsressourcen zwischen einer zentralen Instanz und dezentral in einer Feldebene verteilten Endgeräten nach mindestens einem der Ansprüche 1 bis 3, **dadurch gekennzeichnet, dass** durch den Endpunkt (CEP) eines aufzubauenden Kommunikationsstromes die Bereitstellung einer definierten Übertragungsressource bei einer Ressourcen-Verwaltungsinstanz (RCS) angefragt wird, die Anfrage in der Ressourcen-Verwaltungsinstanz (RCS) überprüft und die beantragte Übertragungsressource im Falle ihrer Verfügbarkeit dem Endpunkt (CEP) des aufzubauenden Kommunikationsstromes zur Nutzung zugewiesen wird.

5. Verfahren zum Aufbau und Überwachen von Kommunikationsströmen innerhalb eines IP-basierten Netzwerkes mit limitierten Übertragungsressourcen zwischen einer zentralen Instanz und dezentral in einer Feldebene verteilten Endgeräten nach mindestens einem der Ansprüche 1 bis 4, **dadurch gekennzeichnet, dass** eine Beendigung der Nutzung einer zugewiesenen Übertragungsressource vom Endpunkt (CEP) des Kommunikationsstromes an die Ressourcen-Verwaltungsinstanz (RCS) gemeldet wird.

6. Verfahren zum Aufbau und Überwachen von Kommunikationsströmen innerhalb eines IP-basierten Netzwerkes mit limitierten Übertragungsressourcen zwischen einer zentralen Instanz und dezentral in einer Feldebene verteilten Endgeräten nach mindestens einem der Ansprüche 1 bis 5, **dadurch gekennzeichnet, dass** im Falle der Nicht-Verfügbarkeit der vom Kommunikations-Endpunkt (CEP) beantragten Übertragungsressource durch die Ressourcen-Verwaltunginstanz (RCS) eine Eskalationsmeldung, die die zum Zeitpunkt der Anfrage bestehenden und freigebbaren Kommunikationsströme sowie deren Priorität enthält, an die zentrale Instanz übermittelt und durch die zentrale Instanz eine Entscheidung über die abzubrechenden Kommunikationsströme an die Ressourcen-Verwaltungsinstanz (RCS) zurückgegeben wird.

7. Verfahren zum Aufbau und Überwachen von Kommunikationsströmen innerhalb eines IP-basierten Netzwerkes mit limitierten Übertragungsressourcen zwischen einer zentralen Instanz und dezentral in einer Feldebene verteilten Endgeräten nach Anspruch 6, **dadurch gekennzeichnet, dass** die Entscheidung über die abzubrechenden Kommunikationsströme durch das operative Bedienpersonal der zentralen Instanz getroffen wird.

8. Verfahren zum Aufbau und Überwachen von Kommunikationsströmen innerhalb eines IP-basierten Netzwerkes mit limitierten Übertragungsressourcen zwischen einer zentralen Instanz und dezentral in einer Feldebene verteilten Endgeräten nach mindestens einem der Ansprüche 1 bis 7, **dadurch gekennzeichnet, dass** der Endpunkt (CEP) eines bestehenden Kommunikationsstromes durch die Ressourcen-Verwaltungsinstanz (RCS) zur Freigabe einer belegten Übertragungsressource aufgefordert wird, die Kommunikationsverbindungen durch den Kommunikations-Endpunkt (CEP) einem Abbruch zugeführt und die frei gewordenen Übertragungsressourcen vom Kommunikations-Endpunkt (CEP) an die Ressourcen-Verwaltungsinstanz (RCS) gemeldet werden.

9. Verfahren zum Aufbau und Überwachen von Kommunikationsströmen innerhalb eines IP-basierten Netzwerkes mit limitierten Übertragungsressourcen zwischen einer zentralen Instanz und dezentral in einer Feldebene verteilten Endgeräten nach mindestens einem der Ansprüche 1 bis 8, **dadurch gekennzeichnet, dass** durch den Endpunkt (CEP) eines bestehenden Kommunikationsstromes bei der Ressourcen-Verwaltungsinstanz (RCS) eine Parameteränderung der Übertragungsressource angefragt wird, die Anfrage in der Ressourcen-Verwaltungsinstanz (RCS) überprüft wird und die beantragte Übertragungsressource mit geänderter Parametrierung im Falle ihrer Verfügbarkeit dem anfragenden Kommunikations-Endpunkt (CEP) zur Nutzung zugewiesen wird.

10. Verfahren zum Aufbau und Überwachen von Kommunikationsströmen innerhalb eines IP-basierten Netzwerkes mit limitierten Übertragungsressourcen zwischen einer zentralen Instanz und dezentral in einer Feldebene verteilten Endgeräten nach mindestens einem der Ansprüche 1 bis 9, **dadurch gekennzeichnet, dass** durch die Ressourcen-Verwaltungsinstanz (RCS) in regelmässigen Zeitabständen eine Lebenszeichenabfrage zur Überprüfung der Aktivität auf der zugeteilten Übertragungsressource an den Endpunkt (CEP) des zu überprüfenden Kommunikationsstromes gerichtet wird.
